# EUROPÄISCHE PATENTANMELDUNG

(11) **EP 2 708 927 A1**
(43) Veröffentlichungstag der Anmeldung: **19.03.2014**
(21) Anmeldenummer: 13172480.9
(22) Anmeldetag: 18.06.2013
(51) Int. Cl.: G02B 6/44, H02G 1/08

(54) **Geteilte Kupplung mit Verlängerungsoption**

(30) Priorität: 17.09.2012 DE 102012108715
(71) Anmelder: Stark, Elena, 85247 Schwabhausen (DE)
(72) Erfinder: Stark, Elena, 85247 Schwabhausen (DE)
(74) Vertreter: Wittmann, Ernst-Ulrich

(57) **Zusammenfassung**

Die vorliegende Erfindung betrifft eine Vorrichtung zur Montage eines ersten und eines zweiten Rohr- und/oder Kabelabschnitts, insbesondere zweier Lichtwellenleiterabschnitte, zur Herstellung einer Verbindung des einen Ende des ersten Abschnitts 1' mit einem Ende des zweiten Abschnitts 1" mittels einer Kupplung 2, wobei zur Verbindung der Abschnitte die Kupplung 2 mindestens zwei Kupplungsteile 3, 3' aufweist, welche eine Oberplatte und eine Unterplatte 5 umfasst, und in der Oberplatte und/oder in der Unterplatte 5 mindestens eine als Hohlraum ausgestaltete Aufnahme 6 angeordnet ist, die zur teilweisen Aufnahme der zu verbindenden Enden des ersten und des zweiten Abschnitts 1', 1" dient. Die Erfindung ist dadurch gekennzeichnet, die Oberplatte und/oder die Unterplatte 5 eines Kupplungsteils 3, 3' ein Arretierelementteil 13, 13' und die Oberplatte 4 und/oder die Unterplatte 5 eines anderen Kupplungsteils 3', 3 ein weiteres Arretierelementteil 13', 13 aufweist und dass die Aufnahme 6 sich in Richtung der Abschnitte 1', 1" erstreckt, wenigstens einen Führungsabschnitt 7 zur Führung und/oder Abdichtung der Abschnittsenden 1', 1" aufweist, und zur Aufnahme einer Dichtmasse 8 dient.

## Beschreibung

Die Erfindung betrifft eine Vorrichtung zur Montage eines ersten und eines zweiten Rohr- und/oder Kabelabschnitts, insbesondere zweier Lichtwellenleiterabschnitte, zur Herstellung einer Verbindung des einen Ende des ersten Abschnitts mit einem Ende des zweiten Abschnitts mittels einer Kupplung, wobei zur Verbindung der Abschnitte die Kupplung mindestens zwei Kupplungsteile aufweist, welche eine Oberplatte und eine Unterplatte umfasst, und in der Oberplatte und/oder in der Unterplatte mindestens eine als Hohlraum ausgestaltete Aufnahme angeordnet ist, die zur teilweisen Aufnahme der zu verbindenden Enden des ersten und des zweiten Abschnitts dient.

Bei einer Vielzahl von Anwendungen ist das Verbinden von zwei Abschnitten eines Rohrs oder Kabels erforderlich, beispielsweise im Bereich der Telekommunikation, in dem Rohre oder Kabel auch über weite Strecken verlegt werden müssen, so dass häufig nicht ein einziges Rohr oder Kabel zur Überbrückung der Strecke verwendet werden kann, sondern verschiedene Kabel- oder Rohrabschnitten zur Überbrückung der Strecke verwendet werden müssen. Diese Kabel- oder Rohrabschnitte müssen zur Sicherstellung der Übertragung des Mediums oder des Signals in besonders sicherer und dauerhafter Weise verbunden werden.

Insbesondere bei der Verwendung von Lichtwellenleitertechnik zur Übertragung von Signalen ergeben sich durch die optische Übertragung gegenüber einer auf Kupferkabeln basierenden elektrischen Übertragung erhebliche Vorteile. Einer der Vorteile ist hierbei die größere mögliche Übertragungsrate - nämlich im Gigabit-/Terrabit-Bereich, bei gleichzeitig sehr großer Überbrückung von bis zu mehreren 100 Kilometern, ohne dass der Einsatz von Zwischenverstärkern erforderlich ist, weil eine genügend große Signalstärke über eine längere Strecke erhalten bleibt. Dies wiederum bedingt einen reduzierten Platzbedarf, da weniger Kabel für die gleiche Anzahl von zu übertragenen Signalen sowie weniger Zwischenverstärker auf einer zu überbrückenden Strecke benötigt werden, was die Installations- und Wartungskosten von Kommunikationsleitern erheblich reduziert.

Obwohl mittels der Lichtwellenleitertechnik größere Strecken überbrückt werden können, besteht weiterhin die Notwendigkeit, die Lichtwellenleiter in geeigneter Weise zu verbinden. Hierbei ergibt sich ein höherer Konfektionierungsaufwand, das Erfordernis einer höheren Präzision sowie Sorgfalt bei der Verlegung und Installation, was eine teurere Gerätetechnik sowie eine aufwendige und komplexe Messtechnik erfordert. Des Weiteren sind Lichtwellenleiter empfindlich gegenüber mechanischer Belastung und es gibt Einschränkungen bei der Verlegung, da keine starken Krümmungen der Kabelabschnitte möglich sind, ohne dass die Übertragung der Signale empfindlich gestört wird.

Die Notwendigkeit einer Stabilisierung der ersten und zweiten Rohr- und/oder Kabelabschnitte variieren je nach Einsatzort, um Übertragungsstörungen, beispielsweise durch starke Krümmungen oder mechanische Belastungen, bei der Verlegung zu vermindern.

Der vorliegenden Erfindung liegt daher die Aufgabe zugrunde, eine Vorrichtung zur Montage eines ersten und eines zweiten Rohr- und/oder Kabelabschnitts der eingangs genannten Art anzugeben, mittels dessen eine besonders einfache und flexibel Verbindbarkeit der Enden der Abschnitte erzielt werden kann. Des Weiteren ist es die Aufgabe der vorliegenden Erfindung ein entsprechendes Verfahren und eine entsprechende Verwendung der Vorrichtung zur Verfügung zu stellen, mittels derer eine besonders einfache und flexibel Verbindbarkeit der Enden der Abschnitte erzielt werden kann.

Erfindungsgemäß wird die voranstehende Aufgabe durch eine Vorrichtung zur Montage eines ersten und eines zweiten Rohr- und/oder Kabelabschnitts mit den Merkmalen des Patentanspruchs 1 gelöst. Danach ist die in Rede stehende Vorrichtung zur Montage eines ersten und eines zweiten Rohr- und/oder Kabelabschnitts derart ausgestaltet und weitergebildet, die Oberplatte und/oder die Unterplatte des ersten Kupplungsteils ein Arretierelementteil und die Oberplatte und/oder die Unterplatte eines weiteren Kupplungsteils ein weiteres zum ersten Arretierelementteil komplementäres Arretierelementteil aufweist und dass die Aufnahme sich in Richtung der Abschnitte erstreckt, wenigstens einen Führungsabschnitt zur Führung und/oder Abdichtung der Abschnittsenden aufweist, und zur Aufnahme einer Dichtmasse dient.

In erfindungsgemäßer Weise ist erkannt worden, dass zur Sicherstellung einer guten Verbindung von Rohr- oder Kabelabschnitten, insbesondere im Bereich der Telekommunikation, aber auch in andere technischen Bereichen, bei einfacher Konstruktion eine Vorrichtung geschaffen werden muss, welche ein Festlegen der Abschnitte bei einfach herzustellender und dennoch flexibler Stabilisierung zueinander ermöglicht. Diese wird durch die erfindungsgemäße, gezielte Festlegung der Abschnitte des Rohrs und/oder des Kabels in einen Führungsabschnitt zur Führung und/oder Abdichtung der Abschnittsenden erreicht. Des Weiteren sind erfindungsgemäß mindestens zwei Kupplungsteile mit jeweils mindestens einer Arretiervorrichtung vorgesehen, die eine Ober- oder eine Unterplatte umfassen, in der eine als Hohlraum ausgestaltete Aufnahme angeordnet ist. Hierdurch ermöglicht die Kupplung das Einbringen einer Dichtmasse, die wiederum die Abschnittsenden festlegen kann. Mittels der Arretiervorrichtungen lassen sich die Kupplungsteile verbinden und sich somit variabler am Einsatzort einbauen. Dadurch wird erreicht, dass bei der Montage, das heißt beim Zusammenführen zweier Rohr- oder Kabelabschnitte mittels des Führungsabschnitts, die Rohr- oder Kabelabschnitte besonders einfach und flexibel zusammenfügbar und durch das Einbringen einer Dichtmasse in die Aufnahme fixierbar sind.

Hinsichtlich einer erhöhten Variabilität der Kupplung könnten drei oder mehr Kupplungsteile vorgesehen ein, wobei zwei Kupplungsteile als Kupplungsendteile und mindestens ein Kupplungsteil als Kupplungszwischenteil ausgebildet sind. Zur Erhöhung der Stabilität der Verbindung und der Verlängerung der Kupplung des ersten und eines zweiten Rohr- und/oder Kabelabschnitts könnten zwei Kupplungszwischenteile vorgesehen sein, wobei mittels der Arretierelementteile sämtliche Kupplungsteile aneinander festlegbar sind. Die Arretierelementteile könnten als unterschiedliche Verbindungen, beispielsweise als Presspassung eines Bolzen und einer Ausnahme, ausgestaltet sein.

Im Hinblick auf eine weitere Stabilisierung der Kupplung könnten die Kupplungsendteile und/oder das Kupplungszwischenteil am Umfang der Aufnahme eine Nut zum Aufnehmen von Dichtmasse aufweist. Die Arretierelementteile sichern die Kupplungsteile derart miteinander, dass die Dichtmasse selbst, bzw. in Kombination mit der Anordnung druckdicht von 1 bis 100 bar, insbesondere zwischen 5 und 50 bar, besonders bevorzugt zwischen 10 und 25 bar und insbesondre bevorzugt bei 15 bar, von innen in die Aufnahme und/oder Nut ist, worauf hin beispielsweise das Kabel oder die Glasfaser eingeschossen werden kann.

Vorzugsweise könnten die Kupplungsendteile einen ummantelten Kabel- und/oder Rohrabschnitt und/oder das Kupplungszwischenteil den Kabel- und/oder Rohrabschnitt ohne Ummantelung aufnehmen.

Im Rahmen einer besonders effektiven Führung der Abschnitte des Rohrs und/oder des Kabels könnte sich die Aufnahme von einem Einführungsbereich für den ersten Abschnitt zu einem Einführungsbereich des zweiten Abschnitts erstrecken. Der oder die Einführungsbereiche könnten beispielsweise als Rohr- oder Kabelführung ausgestaltet sein, in welche die Abschnitte des Rohrs und/oder des Kabels jeweils einbringbar sind.

Hinsichtlich einer besonders einfachen konstruktiven Ausführungsform könnte sich die Aufnahme zumindest zu einem der Einführungsbereiche, vorzugsweise über mindestens einen Radius, besonders bevorzugt über zwei Radien, hin verjüngen. Dies wäre im Hinblick auf die Fertigung der Ober- oder Unterplatte bevorzugt, da die Ober- oder Unterplatte dann mittels einer Spritzgussmaschine hergestellt werden kann. Im Hinblick auf eine besonders gute Fixierung sorgen die Radien dafür, dass durch die eingebrachte Dichtmasse in den Radien ein besonders guter Druck aufgebaut werden kann.

Es könnte - im Rahmen einer besonders guten Abdichtung und Aufnahme der Abschnitte - vorteilhaft sein, wenn die Aufnahme entlang ihrer inneren Kontur zumindest teilweise einen Pressrand aufweist. Dieser Pressrand könnte aus einem elastischen Material gefertigt sein und beispielsweise in einem Zwei-Komponenten-Spritzgussverfahren herstellbar sein.

Hinsichtlich einer wiederum besonders einfachen Ausgestaltung könnte der Führungsabschnitt innerhalb der angeordnet sein. Hierdurch lassen sich besonders einfach zylindrische Abschnitte eines Rohrs und/oder eines Kabels verbinden.

Im Rahmen einer besonders einfachen und unkomplizierten Montage bei dennoch großen Präzision bezüglich der Anordnung der Abschnitte eines Rohrs und/oder eines Kabels zueinander könnte der Führungsabschnitt zur Führung der Abschnitte im Inneren wenigstens einen Anschlag aufweisen. Hierdurch könnten die Abschnitte des Rohrs und/oder des Kabels mit einer hinreichend Genauigkeit in der Hülse angeordnet werden. Die Anschläge könnten hierbei beispielsweise in den Kupplungsendteilen angeordnet sein und/oder als Übergang zwischen dem ummantelten und dem unummantelten Bereichen des Rohrs- und/oder des Kabelabschnitts dienen.

Zur besonders effektiven Verbindung der Abschnitte eines Rohrs und/oder eines Kabels könnte der Anschlag in seiner Höhe im Wesentlichen der Wandstärke eines Führungsabschnitts entsprechen und vorzugsweise ein freies Volumen bereitstellen.

Hinsichtlich einer weiteren Funktion könnte der Anschlag als Dichtung, insbesondere mit einer Dichtlippe, ausgeführt sein. Hierdurch könnte zum Einen die Führung der Abschnitte des Rohrs und/oder des Kabels gewährleistet sein und zum Anderen eine Abdichtung der Abschnitte des Rohrs und/oder des Kabels gegen die in die Aufnahme eingebrachte Dichtungsmasse erfolgen.

Im Hinblick auf eine wiederum besonders einfach Fertigung der Kupplung könnte der Führungsabschnitt zweiteilig ausgebildet sein und vorzugsweise so, dass wenigstens ein Teil des Führungsabschnitts integraler Bestandteil der Ober- und/oder der Unterplatte ist.

Im Rahmen einer wiederum besonders guten Festlegung der Abschnitte des Rohrs und/oder des Kabels könnte der erste und/oder der zweite Einführungsbereich zumindest teilweise eine Struktur, beispielsweise Riefen, eine Rifflung oder dergleichen, zur Bildung einer Zugentlastung mit dem eingebrachten Kabel- oder Rohrabschnitt aufweisen.

Die Dichtmasse könnte aus einer Gruppe von Materialen ausgewählt werden, welche chemisch oder physikalisch reaktive Dichtmassen, nicht-reaktive Dichtmassen, elastische, plastoelastische/elastoplastische oder plastische Dichtmassen, insbesondere Silikone, Polyurethane, Dichtstoffe auf Basis silanmodifizierter Polymere, Polysulfide, Kitt, oder Kombinationen hieraus und dergleichen aufweisen.

Die als Hohlraum ausgestaltete Aufnahme könnte eine die Abschnitte der Kabel oder Rohre umschließende Form bilden, welche eine Öffnung für die Zuführung des Dichtmittels und insbesondere eine weitere Öffnung für das Entweichen von Luft und/oder Dichtmassenüberschuss, insbesondere während des Einfüllvorgangs des Dichtmittels, aufweist.

Die Kupplung, insbesondere wenigstens Teile der Oberplatte und/oder der Unterplatte könnten aus wenigstens einem Material hergestellt sein, welches aus einer Gruppe ausgewählt wird, welches aus einer Gruppe ausgewählt wird, welche AcrylesterStyrol-Acrylnitril, Acrylnitril-Butadien-Styrol, Acrylnitril/ Methylmethacrylat, Acrylnitril/Butadien/Acrylat, Acrylnitril/chloriertes Polyethylen/Styrol, Butadien-Kautschuk, Butylkautschuk, Casein-Kunststoffe, Kunsthorn, Celluloseacetat, Cellulosehydrat, Cellulosenitrat, Chitin, Chitosan, Chloropren-Kautschuk, Cyclo-Olefin-Copolymere, Epoxidharz, Ethylen-Ethylacrylat- Copolymer, Ethylen-Propylen-Copolymer, Ethylen-Propylen-Dien- Kautschuk, Ethylenvinylacetat, Fluorkautschuk, Flüssigkristall-Polymere, Harnstoff-Formaldehydharz, High Impact Polystyrene, Isopren-Kautschuk, Lignin, Melamin-Formaldehydharz, Melamin/Phenol- Formaldehyd, Methylacrylat/Butadien/ Styrol, Naturkautschuk (Gummi arabicum), Perfluoralkoxylalkan, Phenol-Formaldehydharz, Polyacrylnitril, Polyamid, Polyacetal (POM), Polybutylensuccinat, Polybutylenterephthalat, Polycaprolacton, Polycarbonat, Polychlortrifluorethylen, Polyester, Polyesteramid, Polyether-Block-Amid, Polyetherimid, Polyetherketone, Polyethersulfon, Polyethylen, Polyethylenterephthalat, Polyhydroxyalkanoate, Polyhydroxybutyrat, Polyimid, Polyisobutylen, Polylactid (Polymilchsäure), Polymethacrylmethylimid, Polymethylenterephthalat, Polymethylmethacrylat, Polymethylpenten, Polyoxymethylen oder Polyacetal, Polyphenylenether, Polyphenylensulfid, Polyphthalamid, Polypropylen, Polypyrrol, Polystyrol, Polystyrol geschäumt, Polystyrol schlagfest, Polysulfon, Polytetrafluorethylen, Polyurethan, Polyvinylacetat, Polyvinylbutyral, Polyvinylchlorid (Hart-PVC), Polyvinylchlorid (Weich-PVC), Polyvinylidenfluorid, Polyvinylpyrrolidon, Silicon-Kautschuk, Styrol-Acrylnitril- Copolymerisat, Styrol-Butadien-Kautschuk, Styrol-Butadien-Styrol, Thermoplastische Stärke, Thermoplastisches Polyurethan, Ungesättigter Polyester, Vinylchlorid/ Ethylen/ Methacrylat, Vinylchlorid/Ethylen, Verbundwerkstoffe wie zum Beispiel Kunststoff-Metall-Werkstoffe, faserverstärkte Kunststoffe, Kombinationen hiervon und dergleichen aufweist.

Die obige Aufgabe wird des Weiteren durch ein Verfahren zur Montage einer obig beschriebenen Vorrichtung, bei dem der erste und der zweite Abschnitt des Kabels oder Rohrs zur Herstellung einer Verbindung in die Aufnahme der Oberplatte und/oder der Unterplatte des Kupplungsteils verbracht wird, bei dem wenigstens die Kabel- oder Rohrabschnittsenden in dem Führungsabschnitt der Aufnahme angeordnet wird, bei dem die Oberplatte und der Unterplatte, vorzugsweise mittels einer Verschraubung verbunden wird, und bei dem die Dichtungsmasse zur Fixierung der Verbindung des ersten und des zweiten Abschnitts in die Aufnahme eingefüllt wird. Mittels des erfindungsgemäßen Verfahrens wird eine besonders einfache Verbindbarkeit der Enden der Abschnitte eines Kabels oder eines Rohrs ermöglicht.

Im Rahmen einer wiederum einfachen Montage könnten die gegenüberliegenden Enden des ersten und/oder des zweiten Abschnitts des Kabels oder Rohrs vor dem Verbringen in der Aufnahme planparallel abgeschnitten werden.

Die obige Aufgabe wird zudem durch Verwendung einer obigen Vorrichtung für die Herstellung einer Hülsen- oder Rohrverbindung insbesondere bei der Reparatur von Kabel- oder Leitungsführenden Rohren wie beispielsweise Lichtwellenleiterabschnitte, gelöst.

Es gibt nun verschiedene Möglichkeiten, die Lehre der vorliegenden Erfindung in vorteilhafter Weise auszugestalten und weiterzubilden. Dazu ist einerseits auf die im Patentansprüchen 1 und 14 nachgeordneten Patentansprüche und andererseits auf die nachfolgende Erläuterung eines bevorzugten Ausführungsbeispiels der erfindungsgemäßen Vorrichtung zur Montage anhand der Zeichnung zu verweisen. In Verbindung mit der Erläuterung des bevorzugten Ausführungsbeispiels der erfindungsgemäßen Vorrichtung zur Montage anhand der Zeichnung werden auch im Allgemeinen bevorzugte Ausgestaltungen und Weiterbildungen der Lehre erläutert. In der Zeichnung zeigt die
- Fig. 1: in einer schematischen, perspektivischen Ansicht, die Unterplatten eines Ausführungsbeispiels einer erfindungsgemäßen Vorrichtung zur Montage mit zwei Kupplungsendteilen und zwei Kupplungszwischenteilen,
- Fig. 2: in einer schematischen, perspektivischen Ansicht, eine Unterplatte eines Kupplungsendteils des in der Fig. 1 gezeigten Ausführungsbeispiels,
- Fig. 3: in einer schematischen, perspektivischen Ansicht, eine Unterplatte des ersten Kupplungszwischenteils des in der Fig. 1 gezeigten Ausführungsbeispiels
- Fig. 4: in einer schematischen, perspektivischen Ansicht, eine Unterplatte des zweiten Kupplungsendteils des in der Fig. 1 gezeigten Ausführungsbeispiels und
- Fig.5: in einer schematischen, perspektivischen Ansicht, die Unterplatte eines zweiten Kupplungsendteils des in der Fig. 1 gezeigten Ausführungsbeispiels.

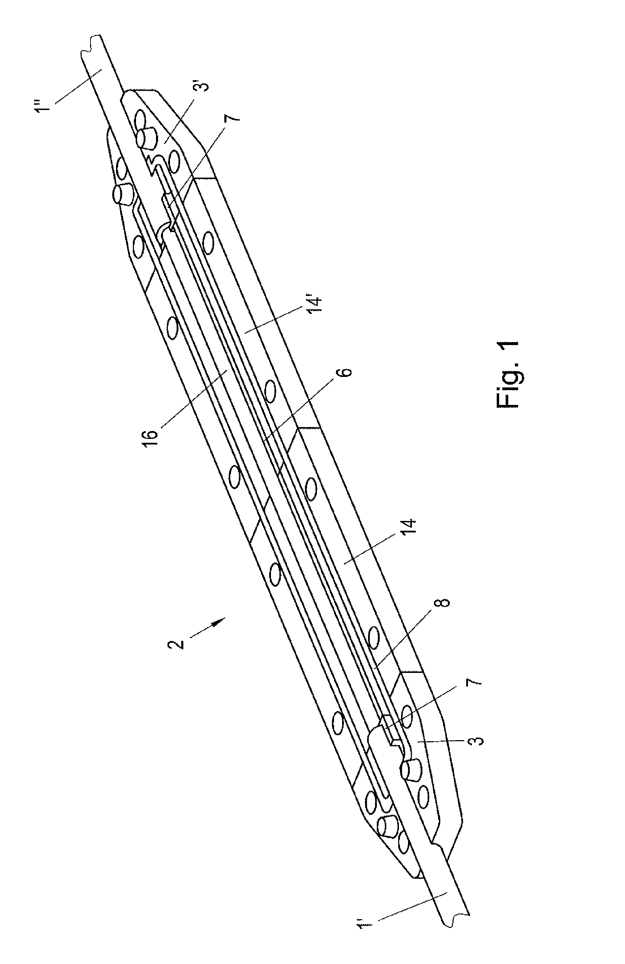

In Fig. 1 ist in einer schematischen, perspektivischen Ansicht, die Unterplatte eines Ausführungsbeispiels einer erfindungsgemäßen Vorrichtung zur Montage von Rohrabschnitten dargstellt. Die Vorrichtung zur Montage eines ersten und eines zweiten Rohrabschnitts, nämlich zweier Lichtwellenleiterabschnitte, dient in dem hier gezeigten Ausführungsbeispiel zur Herstellung einer Verbindung eines Ende einer ersten Rohrabschnitts 1' mit einem Ende eines zweiten Rohrabschnitts 1" mittels einer Kupplung 2. Zur Verbindung der Rohrabschnitte weist die Kupplung 2 vier Kupplungsteile, nämlich zwei Kupplungsendteile 3, 3' und zwei Kupplungszwischenteile 14, 14' auf, welche jeweils eine - in Fig.1 nicht gezeigte - Oberplatte 4 und eine Unterplatte 5 umfasst. In der Oberplatte 4 und in der Unterplatte 5 ist eine als Hohlraum ausgestaltete Aufnahme 6 angeordnet. Die Oberplatten 4 und die Unterplatten 5 sind jeweils aus Polypropylen hergestellt.

Erfindungsgemäß weisen die Kupplungsteile 3, 3', 14, 14' - in der Fig. 1 nicht sichtbares Arretierelementteile 13, 13' auf, wobei die Arretierelementteile 13, 13' als komplementäre Presspassung ausgestaltet sind, so dass die Kupplungsteile jeweils untereinander festlegbar sind. Die Aufnahme 6 erstreckt sich in Richtung der Rohrabschnitte 1', 1" der in der Kupplung 2, wenn diese in der Kupplung 2 angeordnet sind. Ferner ist ein Führungsabschnitt 7 zur Führung und/oder Abdichtung der Abschnittsenden 1', 1" vorgesehen, wenn diese in der Kupplung 2 angeordnet sind, wobei die Aufnahme 6 zur Aufnahme einer Dichtmasse 8 dient.

Die Aufnahme 6 erstreckt sich von einem Einführungsbereich 9' für den ersten Abschnitt 1' des Rohres zu einem Einführungsbereich 9" des zweiten Abschnitts 1" des zweiten Rohres, wobei sich die Aufnahme 6 zu beiden Einführungsbereichen 9', 9" über zwei Radien 10', 10" hin verjüngt. Zur Verbesserung der Passgenauigkeit weist die Aufnahme 6 entlang ihrer inneren Kontur einen Pressrand 11 auf, welcher aus einem thermoplastischen Elastomer gefertigt ist. Durch die Rohrabschnitte 1', 1" ist die Glasfaser 16 in die Kupplung 2 einschießbar.

Innerhalb der Aufnahme 6 ist der Führungsabschnitts 7 zur Führung der Rohrabschnitte 1', 1" angeordnet, der im Inneren einen Anschlag 12 aufweist. Der Anschlag 12 entspricht in seiner Höhe im Wesentlichen der Wandstärke eines Führungsabschnitts 7 entspricht und stellt ein freies Volumen bereit, wobei der Anschlag 12 im vorliegenden Ausführungsbeispiel als Dichtung ausgestaltet ist, so dass die Rohrabschnitte und eventuell in ihnen verlaufende Übertragungselemente nicht mit Dichtmasse 8 verschmutzt werden, wenn diese in die Aufnahme 6 eingebracht wird.

Der Führungsabschnitt 7 selbst ist zweiteilig ausgebildet, wobei dass ein Teil des Führungsabschnitts 7 integraler Bestandteil der Oberplatte und der andere Teil des Führungsabschnitt s 7 Teil der Unterplatte 5 ist.

Sowohl die Oberplatte wie auch die in der Fig. 1 gezeigte Unterplatte 5 weist in dem ersten und dem zweiten Einführungsbereich 9', 9" teilweise Riefen auf. Wird ein Rohrabschnitt 1', 1" in die Einführungsbereiche 9', 9" eingebracht, so bilden diese mit den Riefen eine Zugentlastung.

Die als Hohlraum ausgestaltete Aufnahme 6 weist zudem eine in Fig. 1 nicht gezeigte Öffnung für die Zuführung des Dichtmittels 8 und eine weitere in Fig. 1 ebenfalls nicht gezeigte Öffnung für das Entweichen von Luft und Dichtmassenüberschuss auf. Zur Verdeutlichung der Anordnung der Dichtmasse 8 in der Aufnahme 6 und um den Führungsabschnitt 7 herum, ist in Fig. 1 die Dichtmasse 8 in der Unterplatte 5 einbracht gezeigt. Dies ist selbstverständlich - wie es sich dem Durchschnittsfachmann leicht erschließt - bei der erfindungsgemäßen Vorrichtung erst dann der Fall, wenn die Rohrabschnitte 1', 1" in der Kupplung 2 angeordnet sind und diese mittels der ebenfalls als Presspassung ausgestalten, Festlegelementen 17 und deren in den Oberplatten komplementären Gegenstücken zusammen gefügt sind.

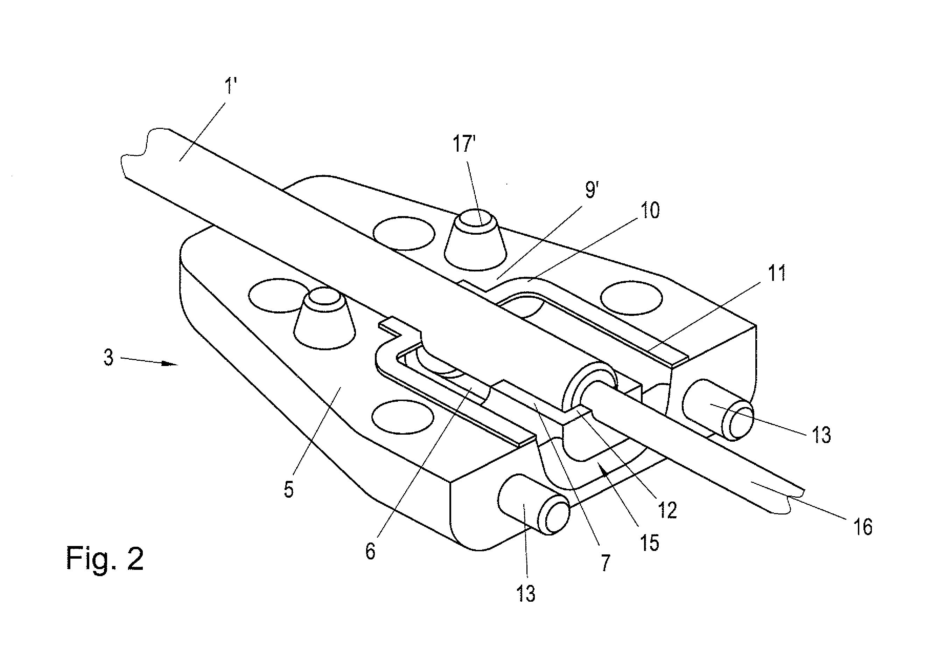

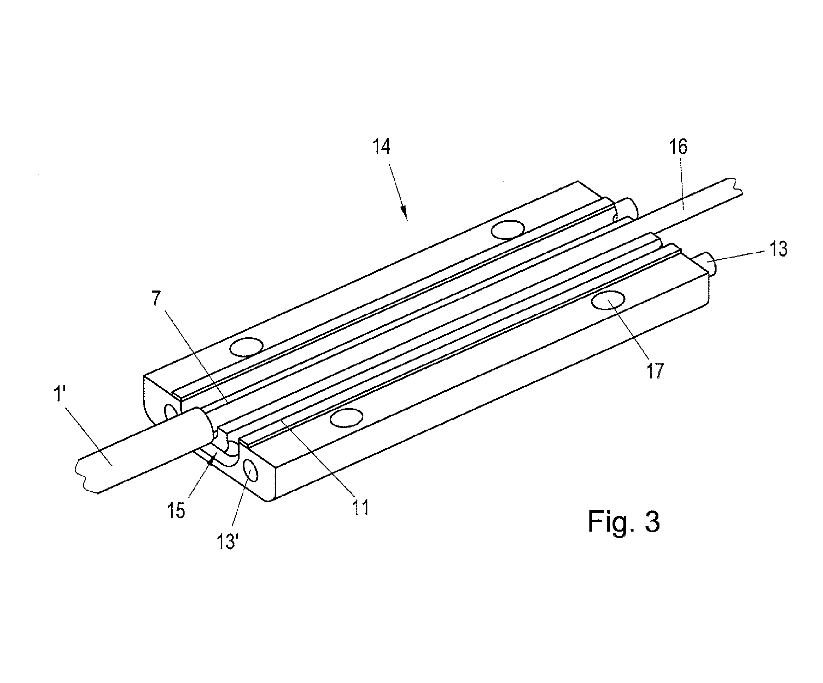

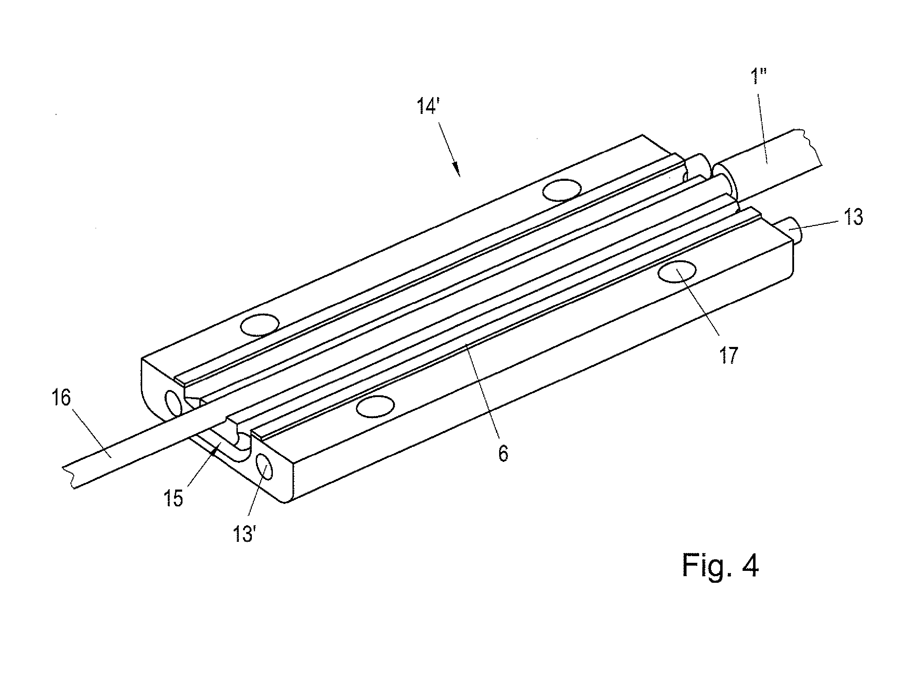

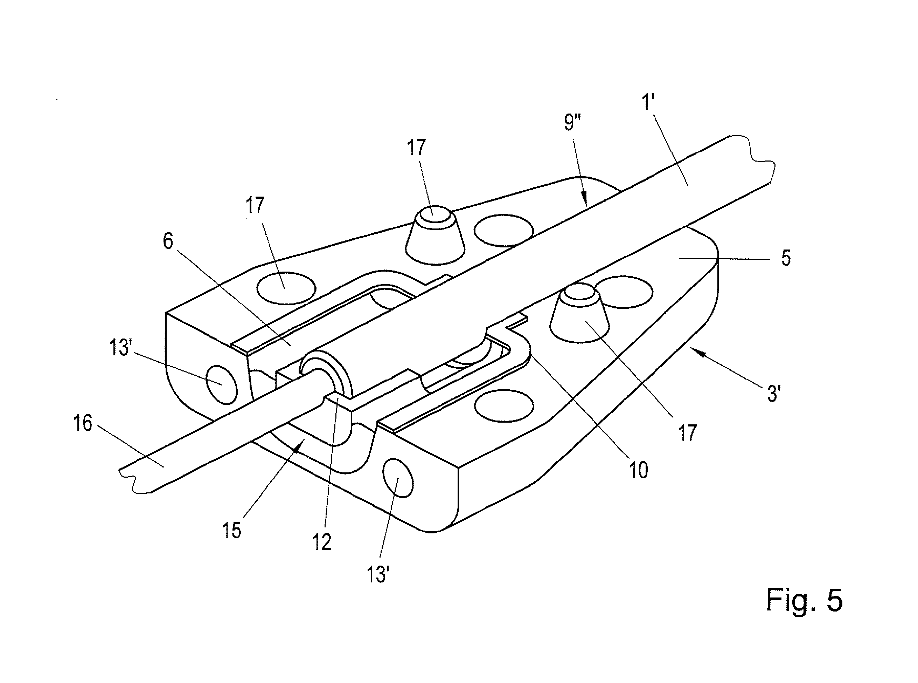

In Fig. 2 ist ein Teil der in Fig. 1 gezeigten Unterplatte 5 im Detail gezeigt. Gleiche Teile weisen hierbei auf gleiche Bezugzeichen auf. Besonders gut ist in Fig. 2 der Einführungsbereich 9' sowie die in zu Illustrationszwecken eingebrachte Dichtmasse 8 zu sehen. In Fig. 3 und 4 sind die Kupplungszwischenteile 14, 14' und in Fig. 5 das zweite Kupplungsendteil 3' gezeigt. In Fig. 2 bis 5 sind nunmehr die Arretierelementteile 13, 13' dargestellt, welche als Kegelstumpf 13 und komplementärer Hohlraum 13' ausgestaltet sind. Zur Vermeidung von Wiederholungen wird jedoch auf die Ausführungen zu Fig. 1 verwiesen.

Zur Montage der in Fig. 1 bis 5 gezeigten Vorrichtung wird folgendes Verfahren verwandt:
- Verbinden der Kupplungsteile 3, 3', 14, 14' mittels Arretierelementteilen 13, 13',
- Verbringen der erste und der zweite Abschnitte des Rohrs zur Herstellung einer Verbindung in die Aufnahme der Oberplatte und der Unterplatte 5 des Kupplungsteils 3,
- Anordnen der Rohrabschnittsenden 1,' 1" in dem Führungsabschnitt 7 der Aufnahme 6,
- Verbinden der Oberplatte und der Unterplatte 5, mittels einer Verschraubung 13', 13",
- Einfüllen der Dichtungsmasse 8 zur Fixierung der Verbindung des ersten und des zweiten Rohrabschnitts 1', 1" in die Aufnahme 6.

Zur Verbesserung der Passgenauigkeit der Verbindung werden die gegenüberliegenden Enden des ersten und des zweiten Rohrabschnitts 1', 1" vor dem Verbringen in der Aufnahme 6 planparallel abgeschnitten.

Die in dem Ausführungsbeispiel beschriebene Vorrichtung zur Herstellung einer Rohrverbindung ist besonders für die Reparatur von leitungsführenden Rohren geeignet.

Hinsichtlich weiterer Details wird zur Vermeidung von Wiederholung auf die allgemeine Beschreibung verwiesen. Schließlich sei darauf hingewiesen, dass die in dem voranstehenden Ausführungsbeispiel, in der allgemeinen Beschreibung und den Patentansprüchen beschriebenen Merkmale in jedweder Weise kombiniert werden können. Ferner sind Merkmale, die im Singular und im Plural beschrieben sind, in ihren Kombinationen mit anderen Merkmalen jeweils als in Einzahl und Mehrzahl beschrieben zu sehen.

## Patentansprüche

1. Vorrichtung zur Montage eines ersten und eines zweiten Rohr- und/oder Kabelabschnitts, insbesondere zweier Lichtwellenleiterabschnitte, zur Herstellung einer Verbindung des einen Ende des ersten Abschnitts (1') mit einem Ende des zweiten Abschnitts (1 ") mittels einer Kupplung (2),
wobei zur Verbindung der Abschnitte die Kupplung (2) mindestens zwei Kupplungsteile (3, 3') aufweist, welche je eine Oberplatte und eine Unterplatte (5) umfasst, und
in der Oberplatte und/oder in der Unterplatte (5) mindestens eine als Hohlraum ausgestaltete Aufnahme (6) angeordnet ist, die zur teilweisen Aufnahme der zu verbindenden Enden des ersten und des zweiten Abschnitts (1', 1 ") dient, **dadurch gekennzeichnet, dass**
die Oberplatte (4) und/oder die Unterplatte (5) des ersten Kupplungsteils (3, 3') ein Arretierelementteil (13, 13') und die Oberplatte und/oder die Unterplatte (5) eines weiteren Kupplungsteils (3', 3) ein weiteres zum ersten Arretierelementteil (13, 13') komplementäres Arretierelementteil (13', 13) aufweist und
dass die Aufnahme (6), welche sich in Richtung der Abschnitte (1', 1") erstreckt, wenigstens einen Führungsabschnitt (7) zur Führung und/oder Abdichtung der Abschnittsenden (1', 1") aufweist, und zur Aufnahme einer Dichtmasse (8) dient.

2. Vorrichtung nach Anspruch 1, **dadurch gekennzeichnet, dass** drei oder mehr Kupplungsteile (3, 3', 14) vorgesehen sind, wobei zwei Kupplungsteile als Kupplungsendteile (3, 3') und mindestens ein Kupplungsteil als Kupplungszwischenteil (14, 14') ausgebildet sind.

3. Vorrichtung nach Anspruch 1 oder 2, **dadurch gekennzeichnet, dass**
die Kupplungsendteile (3, 3') und/oder das Kupplungszwischenteil (14, 14') am Umfang der Aufnahme (6) eine Nut (15) zur Aufnahme einer Dichtmasse (8) aufweist.

4. Vorrichtung nach einem der Ansprüche 1 bis 3, **dadurch gekennzeichnet, dass**
die Aufnahme (6) sich zumindest zu einem der Einführungsbereiche (9', 9"), vorzugsweise über mindestens einen Radius (10), besonders bevorzugt über zwei Radien, hin verjüngt.

5. Vorrichtung nach einem der Ansprüche 1 bis 4, **dadurch gekennzeichnet, dass**
die Aufnahme (6) teilweise entlang ihrer inneren Kontur einen Pressrand (11) aufweist.

6. Vorrichtung nach einem der Ansprüche 1 bis 5, **dadurch gekennzeichnet, dass**
sich die Aufnahme (6) von einem Einführungsbereich (9') für den ersten Abschnitt zu einem Einführungsbereich (9") des zweiten Abschnitts (1 ") erstreckt.

7. Vorrichtung nach einem der Ansprüche 1 bis 6, **dadurch gekennzeichnet, dass**
der Führungsabschnitt (7) innerhalb der Aufnahme angeordnet ist.

8. Vorrichtung nach einem der Ansprüche 1 bis 7, **dadurch gekennzeichnet, dass**
der Führungsabschnitt (7) zur Führung der Abschnitte im Inneren wenigstens einen Anschlag (12) aufweist.

9. Vorrichtung nach Anspruch 8, **dadurch gekennzeichnet, dass**
der Anschlag (12) in seiner Höhe im Wesentlichen der Wandstärke eines Führungsabschnitts (7) entspricht und vorzugsweise ein freies Volumen bereitstellt.

10. Vorrichtung nach Anspruch 9, **dadurch gekennzeichnet, dass**
der Anschlag (12) als Dichtung, insbesondere mit einer Dichtlippe ausgeführt ist.

11. Vorrichtung nach einem der Ansprüche 1 bis 10, **dadurch gekennzeichnet, dass**
der Führungsabschnitt (7) zweiteilig ausgebildet ist und vorzugsweise, dass wenigstens ein Teil des Führungsabschnitts (7) integraler Bestandteil der Ober- und/oder der Unterplatte ist.

12. Vorrichtung nach einem der Ansprüche 1 bis 11, **dadurch gekennzeichnet, dass**
der erste und/oder der zweite Einführungsbereich (9', 9") zumindest teilweise eine Struktur, beispielsweise Riefen, eine Riffelung, zur Bildung einer Zugentlastung mit dem Kabel- oder Rohrabschnitt aufweist.

13. Vorrichtung nach einem der Ansprüche 1 bis 12, **dadurch gekennzeichnet, dass**
die Dichtmasse (8) aus einer Gruppe von Materialien ausgewählt wird, welche chemisch oder pysikalisch reaktive Dichtmassen, nicht reaktive Dichtmassen, elastische, plastoelastische / elastoplastische oder plastische Dichtmassen, insbesondere Silkone, Polyurethane, Dichtstoffe auf Basis silanmodifizierter Polymere, Polysulfide, Kitt, Kombinationen hieraus und dergleichen aufweist.

14. Vorrichtung nach einem der Ansprüche 1 bis 13, **dadurch gekennzeichnet, dass**
die als Hohlraum ausgestaltete Aufnahme (6) eine die Abschnitte der Kabel oder Rohre umschließende Form bildet, welche eine Öffnung für die Zuführung des Dichtmittels (8) und insbesondere eine weitere Öffnung für das Entweichen von Luft und/oder Dichtmassenüberschuss, insbesondere während des Einfüllvorgangs des Dichtmittels aufweist.

15. Vorrichtung nach einem der Ansprüche 1 bis 14, **dadurch gekennzeichnet, dass**
die Kupplung (2) insbesondere wenigstens Teile der Oberplatte (4) und/oder der Unterplatte (5) aus wenigstens einem Material hergestellt sind, welches aus einer Gruppe ausgewählt wird, welche Acrylester-Styrol-Acrylnitril, Acrylnitril-Butadien-Styrol, Acrylnitril/ Methylmethacrylat, Acrylnitril/Butadien/Acrylat, Acrylnitril/chloriertes Polyethylen/Styrol, Butadien-Kautschuk, Butylkautschuk, Casein-Kunststoffe, Kunsthorn, Celluloseacetat, Cellulosehydrat, Cellulosenitrat, Chitin, Chitosan, Chloropren-Kautschuk, Cyclo-Olefin-Copolymere, Epoxidharz, Ethylen-Ethylacrylat- Copolymer, Ethylen-Propylen-Copolymer, Ethylen-Propylen-Dien- Kautschuk, Ethylenvinylacetat, Fluorkautschuk, Flüssigkristall-Polymere, Harnstoff-Formaldehydharz, High Impact Polystyrene, Isopren-Kautschuk, Lignin, Melamin-Formaldehydharz, Melamin/Phenol- Formaldehyd, Methylacrylat/Butadien/ Styrol, Naturkautschuk (Gummi arabicum), Perfluoralkoxylalkan, Phenol-Formaldehydharz, Polyacrylnitril, Polyamid, Polyacetal (POM), Polybutylensuccinat, Polybutylenterephthalat, Polycaprolacton, Polycarbonat, Polychlortrifluorethylen, Polyester, Polyesteramid, Polyether-Block-Amid, Polyetherimid, Polyetherketone, Polyethersulfon, Polyethylen, Polyethylenterephthalat, Polyhydroxyalkanoate, Polyhydroxybutyrat, Polyimid, Polyisobutylen, Polylactid (Polymilchsäure), Polymethacrylmethylimid, Polymethylenterephthalat, Polymethylmethacrylat, Polymethylpenten, Polyoxymethylen oder Polyacetal, Polyphenylenether, Polyphenylensulfid, Polyphthalamid, Polypropylen, Polypyrrol, Polystyrol, Polystyrol geschäumt, Polystyrol schlagfest, Polysulfon, Polytetrafluorethylen, Polyurethan, Polyvinylacetat, Polyvinylbutyral, Polyvinylchlorid (Hart-PVC), Polyvinylchlorid (Weich-PVC), Polyvinylidenfluorid, Polyvinylpyrrolidon, Silicon-Kautschuk, Styrol-Acrylnitril- Copolymerisat, StyrolButadien-Kautschuk, Styrol-Butadien-Styrol, Thermoplastische Stärke, Thermoplastisches Polyurethan, Ungesättigter Polyester, Vinylchlorid/ Ethylen/ Methacrylat, Vinylchlorid/Ethylen, Polypropylen, Verbundwerkstoffe wie zum Beispiel Kunststoff-Metall-Werkstoffe, faserverstärkte Kunststoffe, Kombinationen hiervon aufweist.

16. Verfahren zur Montage einer Vorrichtung nach einem der Ansprüche 1 bis 15, **dadurch gekennzeichnet, dass**
die Kupplungsteile 3, 3', 14, 14' mittels den Arretierelementteilen 13, 13' verbunden werden,
der erste und der zweite Abschnitt des Kabels oder Rohrs zur Herstellung einer Verbindung in die Aufnahme der Oberplatte und/oder der Unterplatte (5) des Kupplungsteils verbracht wird,
Anordnen wenigstens einen der Kabel- oder Rohrabschnittsenden in dem Führungsabschnitt (7) der Aufnahme,
Verbinden der Oberplatte und der Unterplatte (5), vorzugsweise mittels einer Verschraubung,
Einfüllen der Dichtungsmasse (8) zur Fixierung (6) der Verbindung des ersten und des zweiten Abschnitts (1', 1") in die Aufnahme.

17. Verfahren zur Montage einer Vorrichtung nach Anspruch 16, **dadurch gekennzeichnet, dass**
die gegenüberliegenden Enden des ersten und/oder des zweiten Abschnitts (1', 1 ") des Kabels oder Rohrs vor dem Verbringen in der Aufnahme (6) planparallel abgeschnitten werden.

18. Verwendung einer Vorrichtung gemäß einem der Ansprüche 1 bis 17 für die Herstellung einer Hülsen- oder Rohrverbindung, insbesondere bei der Reparatur von kabel- oder leitungsführenden Rohren wie beispielsweise Lichtwellenleiterabschnitten.
